# EUROPEAN PATENT APPLICATION

(11) **EP 4 283 506 A1**
(43) Date of publication of application: **29.11.2023**
(21) Application number: 22275068.9
(22) Date of filing: 26.05.2022
(51) Int. Cl.: G06F 21/62, B63B 79/10, B63B 79/40

(54) **CONTROLLING A COMPONENT OF AN AQUATIC VESSEL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system configured to control a component of an aquatic vessel comprises a computer system (100) comprising a processor (102) and a storage (104) including an application configured to process input data to generate information relating to controlling a component of an aquatic vessel (110). The application comprises a plurality of microservices, and the computer system is configured to not communicate with an external communications network.

## Description

### FIELD OF THE INVENTION

The present invention relates to controlling a component of an aquatic vessel.

### BACKGROUND

In the development of many control systems, in particular sensitive systems such as ones used to control vehicles and/or their components, core functionality must go through lengthy security, assurance and deployment processes before being approved for use. When deployed, software for the system is typically packaged in cumbersome, data-heavy virtual machines. As a result, software maintenance and improvement processes are lengthy and can be unnecessarily complicated. Further, such control systems need to have a high level of security from external threats.

### SUMMARY

Embodiments of the present invention are intended to address the above technical problems.

Embodiments can be based on a novel infrastructure that enables and supports the rapid insertion of technology into a system that assists with controlling components of aquatic vessels. Embodiments can break down functionality into lightweight, modularised components known as microservices. Microservice systems are already used in industry (e.g. Amazon, Netflix etc), but the technology is not currently applicable to certain types of control systems and does not provide the same level of complexity, security and assurance as embodiments described herein.

Embodiments can enable the rapid insertion into the control system based on one or more security streams. In embodiments these can comprise the system being offline and air-gapped, and may further include a focus on data security and/or the implementation of DevSecOps.

According to an aspect of the present invention, there is provided a system configured to (generate information relating to) control a component of an aquatic vessel, the system comprising:
a computer system comprising a processor and a storage including an application configured to process input data to generate information relating to controlling a component of an aquatic vessel,
wherein the application comprises a plurality of microservices, and
wherein the computer system has no (functioning) interface to an external communications network and/or is configured to not communicate with an external communications network.

The plurality of microservices may be implemented using a containerised architecture in the computer system.

The containerised architecture may comprise a security layer. The security layer may comprise at least one microservice/container configured to provide a security-related function, including at least one of: data encryption, vulnerability scanning, compliance checking and overview, auditing and/or certification of access, logging tool, intrusion monitoring, anomaly detection, data scrubbing, data assurance, schema validation, data tagging, data export facility, access control, as well as a security gateway, accredited encryption tools and IP-address filtering.

The plurality of microservices may be created and maintained using DevSecOps principles.

The containerised architecture may comprise secure payloads, which may include "plug and play" microservices provided by third party developers.

The input data may comprise sensor data relating to the aquatic vessel and/or external environment.

The computer system may further comprise one or more (functioning) interface for a removable storage medium. The computer system, or the application, may be configured to transfer the generated information to the removable storage medium via the interface.

According to another aspect of the present invention, there is provided a computer-implemented method of generating information relating to controlling a component of an aquatic vessel, the method comprising:
executing the application on a computer system substantially as described herein to process input data to generate information relating to controlling a component of an aquatic vessel.

The method may further comprise:
transferring the generated information to a removable storage medium, and
transferring the generated information from the removable storage medium to a second computer system for further processing.

The second computer system may use the generated information to control a component of the aquatic vessel.

The step of generating the information may comprise receiving input data comprising observations regarding speed, depth and/or bearing of the vessel, and an observation regarding a position of a detected objected. The step of generating the information may comprise processing the input data to assess whether the vessel is likely to collide with the detected object, and if there is a collision risk then the generated information may comprising information relating to avoiding the collision, e.g. change speed/halt, change depth and/or bearing of the vessel, etc. The generated information may take the form of information that can be displayed to a user and/or be useable for generating control signals for the vessel. Alternative examples include health monitoring and improving energy/fuel usage of a vessel.

According to another aspect of the present invention there is provided an aquatic vessel control system comprising at least one processor configured to receive data generated by a system substantially as described herein. The control system may be located in a control room or onboard the aquatic vessel.

According to another aspect of the present invention there is provided an aquatic vessel comprising a plurality of sensors and/or configured to receive control signals based on the information relating to controlling the aquatic vessel.

According to a further aspect of the present invention there is provided a computer readable medium, or circuit, storing a computer program to operate methods substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of a computer system according to an example embodiment;
Figure 2 schematically illustrates an architecture of the example embodiment, and
Figure 3 is a flowchart depicting steps performed by an example embodiment.

### DETAILED DESCRIPTION

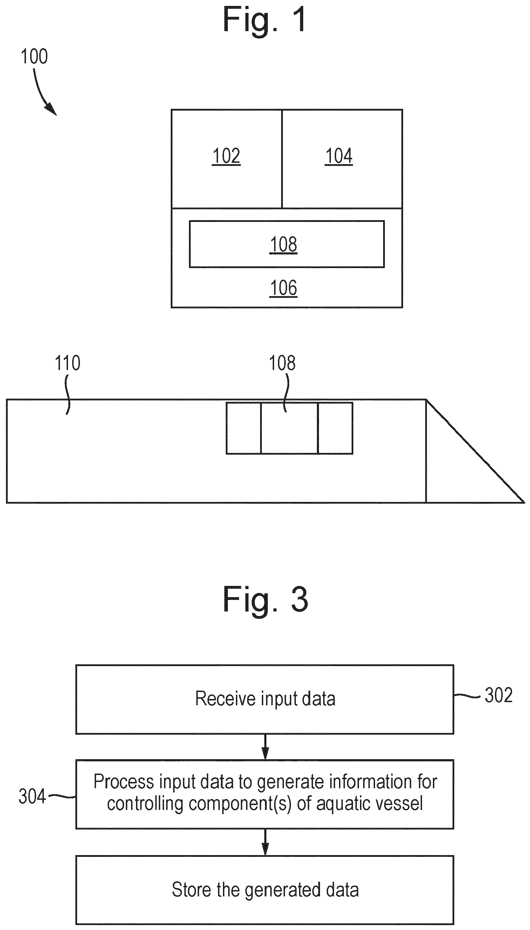

Figure 1 is a block diagram of a computer system 100 configurable to execute embodiments of the invention. The system will normally comprise at least one processor 102 and a memory 104. The system can comprise, for example, a desktop class PC. Other components and features of the system, such as a user interface, housing, power supply/source, one or more removable external storage interface 106 (for USB drive, CD or the like), a display 108, etc, will be well-known to the skilled person and need not be described herein in detail.

Unlike conventional computing systems the computing system 100 does not include a functioning communications interface for providing data communication over a network with other devices via a wired or wireless connection. If the system is built with a communications interface then at least some of the hardware components of the interface can be removed or disabled for this purpose. Additionally or alternatively, software/firmware instructions may be automatically executed by the system on startup to disable the communications interface, e.g. to deny networking-related software functions, deny access to network spaces, etc.

The process of configuring the computer system in this manner is known as air-gapping. Air-gapping is a term used when a network/system/computer has no network interfaces to any "outside networks". Air-gapping of a containerised control system for components of one or more aquatic vehicle is not known. By using air-gapping embodiments can bolster security because any data movement can be strictly controlled. For example, data can only be physically moved between the outside world and the air-gapped system in a specific manner that does not involve a communications network. In some embodiments this is done using a removable storage medium, e.g. a Compact Disc or USB Drive. The system can include one or more functioning interface 106 for a removable storage medium for this purpose.

In a typical embodiment the device 100 can receive input data via its user interface and/or the removable storage medium. As illustrated in Figure 1, the input data will typically comprise at least observations from a plurality of sensors 108 associated with one or more aquatic vessel 110 and/or the external environment. The vessel(s) may comprise any type of aquatic vessel, including a submarine. The vessel may be fully or partially autonomous, or may receive commands from a local or remote human user. The vessel can include a control system (not shown) which may receive data. The data may comprise, or be used to generate, control signals for the vessel and can be generated by the computer system 100 and/or another system.

Examples of suitable sensors 108 include a velocity sensor, accelerometer, sonar array, radar, visual/camera, hydrophone, echosounder, pressure sensor, temperature sensor, density sensor, gyroscope, magnetic anomaly detectors, radio antenna, etc. Examples of observations include course, speed, depth, bearing, range, classification, bearing rate, range rate, speed of sound, pressure, salinity, temperature, density, pitch, roll, conductivity, etc. The observations may relate to the vessel on which the sensors are mounted and/or characteristics of other remote vessels and/or environment/objects detected. It will be appreciated that the data type, format, units, etc, of the input data can vary.

The memory 106 of the computer system 100 will comprise at least one application that processes the data to generate information relating to controlling the components of at least one aquatic vessel. The component may be located in or on at least one of the vessels 110 that from which the input data originates and/or in or on at least one another aquatic vessel. Embodiments can operate in combination with an aquatic vessel control system (e.g. in a submarine control room).

In some embodiments, the software application may generate information representing signals for controlling one or more component of one or more of the aquatic vessels in order to directly control it. For example, the component may comprise an engine or steering mechanism (of subsystem thereof) so that the speed and/or bearing, etc, of the vessel may be changed/controlled. In such cases, the generated information may comprise instructions regarding a change in speed, a target bearing, etc. It will be understood that the generated information may be processed in any suitable manner in order to produce signals suitable for controlling the vessel. Alternatively or additionally, the application may generate information that can be used to control the vessel in coordination with a human user, e.g. via a display.

The application may comprise a plurality of microservices. By deploying software as microservices, the individual components that compose a larger function can be developed, maintained, and improved separately, and in parallel, leading to increased efficiency and quality. Using well-defined I/O schemas, system developers are able to easily access the data they need and communicate seamlessly between these different components. The microservices can be created using any suitable programming language, e.g. Java^{™}, Python^{™}, etc, and can be containerised using any suitable system, e.g. Docker^{™} produced by Docker, Inc of Palo Alto, CA, USA.

Microservices are deployed into containers, which are lightweight "virtual machines" that contain only the required bare minimum software to operate. A container typically comprises components that run on top of a host operating system that may be hosting other containers. Containers are normally dependent upon the host OS to provide operating system services, such as I/O, memory management, CPU, etc. Containers are a fraction of the size of full virtual machines, and can be spun-up, brought down, and replicated at much higher speeds. This can be achieved through a container orchestration platform (COP), which intelligently and automatically manages system health to ensure a very high level of fault-tolerance.

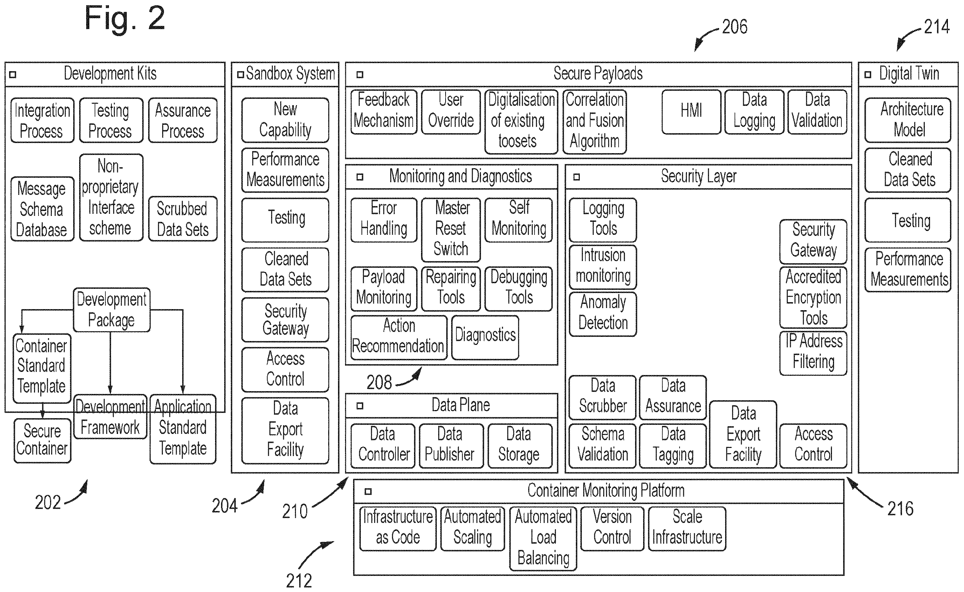

Figure 2 schematically illustrates an architecture of an example embodiment that may be implemented using the computer system 100. The Figure shows a specific instantiation of the system and generic components within the platform. It is a logical diagram and does not necessarily describe the physical layout of the system; rather, it shows how components are arranged logically. Each block may contain one or many microservices or containers. The skilled person will therefore understand that it is exemplary and in alternative embodiments some of the blocks may be omitted or rearranged and/or at least one additional block may be included.

The architecture may comprise development kits 202. These comprise elements that allow parties to create code/microservices that can be used by embodiments. They may include, for example, elements relating to integration, testing and assurance processes. They may also include a message scheme database, a non-proprietary interface scheme and scrubbed data sets. The elements may further include a developer package that can include a container standard template for building as secure container, a development framework and application standard templates.

The architecture may further comprise sandbox system 204. These will typically include elements that allow applications to be securely tested. The elements may include ones that can add a new capability, measure performance, test and cleaned data sets. They may further comprise a security gateway, access control and a data export facility.

The architecture may further comprise secure payloads 206. These may include "plug and play" microservices provided by third parties that can provide any desired functionality/capability to embodiments, e.g. submarine control applications, etc. Examples include a feedback mechanism, user override, digitization of existing toolsets, correlation and fusion algorithms, human-machine interface, data logging and data validation.

The architecture may further comprise monitoring and diagnostics 208. Example elements can include error handling, debugging tools, master reset switch, self-monitoring, payload monitoring, repairing tools, action recommendation and any suitable form of diagnostics.

The architecture may further comprise data plane 210. These can include elements that all data to flow between, and be used by, the microservices. Example elements include a data controller, data publisher and data storage.

The architecture may further comprise container hosting platform 212. This can comprise any suitable orchestration platform, such as Docker^{™} Hub or Tanzu^{™} by VMWare, Inc. Example elements typically include infrastructure as code, automated scaling, automated load balancing, version control and scalable infrastructure.

The architecture may further comprise a digital twin 214. Elements can typically include architecture model, cleaned data sets, testing and performance measurements.

The architecture may further comprise secure layer 216. Data security covers a wide range of security assurances that can be provided by the system architecture, such as the encryption of data, vulnerability scanning, compliance checking and overview, auditing and/or certification of access. The integrity of the system will be further underpinned by the application of prescriptive security practices during installation as well as the security hardening of the underpinning architecture. For instance, embodiments may utilise a zero-trust architecture, a requirement for all communication to be authenticated and/or encrypted, and follow least-access provisioning. Example elements of this layer can include logging tools, intrusion monitoring, anomaly detection, data scrubbing, data assurance, schema validation, data tagging, data export facility, access control, as well as a security gateway, accredited encryption tools and IP-address filtering.

Embodiments can also incorporate principles from DevSecOps (DEVelopment, SECurity and OPerationS) and continuous integration/continuous deployment (CI/CD) processes to rapidly reduce the time between idea conception and deployment onto a control system. This can allow innovation to proceed unhindered by lengthy processes, and allows end-users to start using technology that gives operators a real advantage in a fraction of the normal time. DevSecOps is the integration of security practices into DevOps. It is also termed as "Shifting Security Left", where each delivery team is empowered to factor in the correct security controls into their software delivery. This results in security practices being implemented earlier in the development lifecycle, which is performed in three main areas, static, software composition, and dynamic.

Figure 3 is a flowchart depicting operations in an example method 200 according to an embodiment operates and shows steps performed by means of software instructions being executed by the microservices on the computing system 100. It will be appreciated that at least one of the steps described herein may be re-ordered or omitted. One or more additional steps may be performed in some cases. Further, although the steps are shown as being performed in sequence in the Figures, in alternative embodiments some of them may be performed concurrently, possibly on different processors or cores. It will also be understood that embodiments can be implemented using any suitable software, programming language, data editors, etc, and may be represented/stored/processed using any suitable data structures and formats.

At step 302 the application can receive input data. This may be received via a user interface of the computer system 100 and/or the removable storage medium. The input data may comprise sensor data relating to at least one aquatic vessel and/or external environment/diagnostics.

At step 304 the input data can be processed by the application to generate information relating to controlling one or more component of at least one aquatic vessel. This processing can take various forms. For example, the method may comprise determining a situation of the aquatic vessel from the input data, and generating information relating to how the aquatic vessel component(s) should be operated in response to the situation.

For instance, the input data may comprise observations regarding the speed, depth and bearing of the vessel, as well as data regarding the position of a detected objected. This input data may be processed by the application to assess whether the vessel is likely to collide with the detected object. If there is a collision risk then it may generate information relating to avoiding the collision, e.g. change speed/halt, change depth and/or bearing of the vessel, etc. The generated information may take the form of information that can be displayed to a user and/or be useable for generating control signals for the vessel. Alternative examples include health monitoring and improving energy/fuel usage of a vessel. For instance, embodiments may receive observations relating to the current energy/fuel usage of the vessel and process these to generate information that controls one or more vessel components, e.g. engine, in order to reduce fuel/energy usage, such as by taking advantage of a prevailing current detected by another sensor/observation. It will be understood that these are exemplary only and many variations are possible.

At step 306 the generated data may be stored in at least the internal memory 104 of the computer system 100. In some cases, the data may also be displayed on a screen 108 connected to the computer system 100. Additionally or alternatively, at least some of the generated data may be subsequently transferred to another computing device, e.g. using the removable storage medium, for further processing. For example, the data may comprise, or be used to generate, control signals for an aquatic vessel.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A system configured to control a component of an aquatic vessel, the system comprising:
a computer system (100) comprising a processor (102) and a storage (104) including an application configured to process input data to generate information relating to controlling a component of an aquatic vessel (110),
wherein the application comprises a plurality of microservices, and
wherein the computer system is configured to not communicate with an external communications network.

2. A system according to claim 1, wherein the computer system (100) has no functioning interface to the external communications network.

3. A system according to claim 1 or 2, wherein the plurality of microservices are implemented using a containerised architecture in the computer system (100).

4. A system according to claim 3, wherein the containerised architecture comprises a security layer (216) including at least one microservice/container configured to provide at least one respective security-related function.

5. A system according to claim 4, wherein the security-related function(s) includes at least one of: data encryption, vulnerability scanning, compliance checking and overview, auditing and/or certification of access, logging tool, intrusion monitoring, anomaly detection, data scrubbing, data assurance, schema validation, data tagging, data export facility and access control.

6. A system according to any one of claims 3 to 5, wherein the containerised architecture further comprises secure payloads that include plug and play microservices provided by third party developers.

7. A system according to any preceding claim, wherein the input data comprises sensor data relating to the aquatic vessel and/or external environment.

8. A system according to any preceding claim, wherein the computer system further comprises one or more functioning interface (106) for a removable storage medium and the computer system (100), or the application, is configured to transfer the generated information to the removable storage medium via the interface.

9. A system according to any preceding claim, wherein the aquatic vessel (110) comprises a submarine.

10. A computer-implemented method of generating information relating to controlling a component of an aquatic vessel, the method comprising:
executing the application on the computer system according to claim 1 to process (304) the input data to generate the information relating to controlling a component of an aquatic vessel.

11. A method according to claim 10, wherein the method further comprises:
transferring the generated information to a removable storage medium, and
transferring the generated information from the removable storage medium to a second computer system for further processing.

12. A method according to claim 11, wherein the second computer system uses the generated information to control the component of the aquatic vessel.

13. A method according to claim 11 or 12, wherein:
the step of generating the information comprises receiving (302) the input data comprising observations regarding speed, depth and/or bearing of the vessel, and an observation regarding a position of a detected objected, and
the step of generating the information comprises processing (304) the input data to assess whether the vessel is likely to collide with the detected object, and if there is a collision risk then the generated information comprises information relating to avoiding the collision, including change speed/halt, change depth and/or bearing of the vessel.

14. A computer readable medium, or circuit, storing a computer program configured to operate a method according to any one of claims 10 to 13.
